## Europäisches Patentamt
## European Patent Office
## Office européen des brevets

(11) Publication number: **0 139 058**
**A1**

(12) # EUROPEAN PATENT APPLICATION

(21) Application number: **83306470.2**

(22) Date of filing: **25.10.83**

(51) Int. Cl.⁴: **B 65 G 1/04**

(43) Date of publication of application:
**02.05.85 Bulletin 85/18**

(84) Designated Contracting States:
**DE FR SE**

(71) Applicant: **BABCOCK FATA LIMITED**
**Dawson Road**
**Bletchley Milton Keynes MK1 1JY(GB)**

(72) Inventor: **White, Richard Charles**
**Dawson Road**
**Bletchley Milton Keynes MK1 1JY(GB)**

(74) Representative: **Lewis, David Overington**
**c/o Babcock International plc Cleveland House 19 St.**
**James's Square**
**London SW1Y 4LN(GB)**

(54) Improvements relating to warehouses.

(57) A warehouse for the mechanised stacking and retrieval of long, thin, loads (6) has (Figure 3) a multiplicity of racks (10) each with shelves (30) and running on first rails (12). A gantry crane (34) runs on second rails (40) outwardly of the racks (10) and has a vertically movable carriage (46) equipped with extendable and retractable transfer arms (50) for transferring the loads (6) between the shelves (30) and the carriage (46). The loads (6) are further transferred between the carriage (46) and an endless conveyor (62) running in a space formed beneath the shelves for movement from or to infeed the outfeed stations (64), (66). A computer control system may be provided to activate the various transfer steps and to provide a record of the occupancy of the shelves (30).

FIG.3

Croydon Printing Company Ltd.

EP 0 139 058 A1

- 1 -                              0139058

## DESCRIPTION

## "IMPROVEMENTS RELATING TO WAREHOUSES".

This invention relates to warehouses arranged for the mechanised stacking of loads thereinto and the mechanised retrieval of loads therefrom. More particularly, the invention relates to a warehouse for the mechanised stacking and retrieval of long, thin, loads, such as rolls of carpeting, or bar, rod and tube stock.

Hitherto such long, thin, loads have usually been accommodated in warehouses using an arrangement whereby they are stacked or retrieved by movement in a direction parallel to the major axis of the long, thin, load. Such an arrangement requires the availability of a clear space for the stacking or retrieving machinery approximating to the space occupied by the racks adjacent the feed and retrieval face of the racks.

According to the present invention there is provided a warehouse arranged for the mechanised stacking of long, thin, loads thereinto and the mechanised retrieval of such long, thin, loads therefrom including a multiplicity of racks, each rack including an array of vertically spaced, horizontally extending, bays and running on a first set of spaced rails extending below base portions of the racks and each rack being formed at the base portion thereof with a spaced framework providing a free space sufficient to permit the passage of the loads, a gantry crane running on a second set of rails disposed parallel to, but outwardly of, the first set of rails and carrying a carriage movable vertically between a position in register with the spaced framework of each rack and a position clear above upper extremities of the racks with intermediate positions in register with the individual bays, extendable and retractable transfer arms arranged to transfer loads from and to the carriage, conveyor means extending through the spaced framework of the racks to transfer loads through the respective free spaces of the racks, the racks being positionable in contiguous relationship on the first set of rails and movable to space apart, and form a gap between, adjacent racks to permit movement of the carriage of the crane gantry therebetween.

The invention will now be described, by way of example, with reference to the accompanying, partly diagrammatic, drawings, in which:-

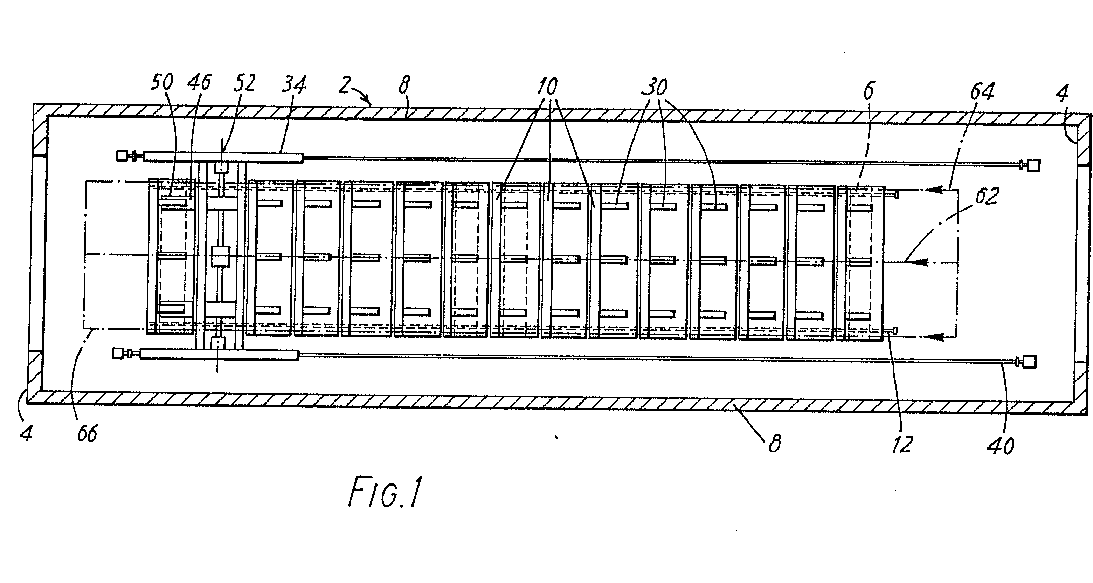

Figure 1 is a sectional plan view of a
warehouse;

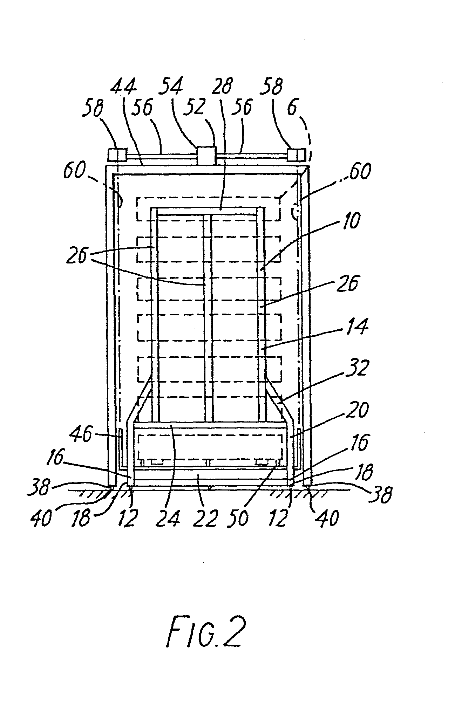

Figure 2 is an end elevation of the
warehouse with walls omitted; and

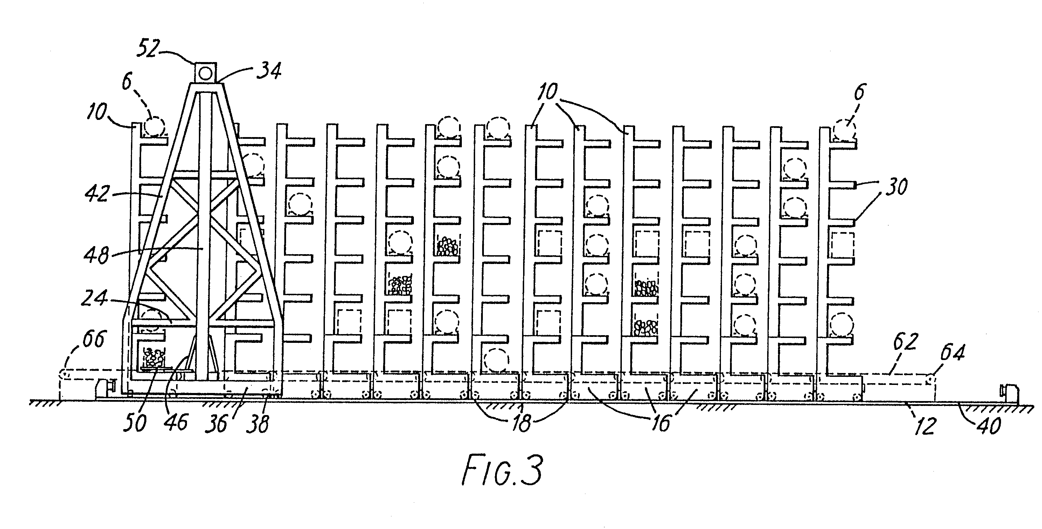

Figure 3 is a side elevation of the warehouse
with walls omitted.

As shown, the warehouse 2 has an elongate plan
form with shorter walls 4 having a dimension
slightly more than the maximum longitudinal length
of long, thin, loads 6 to be stored and longer
walls 8 having a dimension slightly more than the
combined depths of contiguous racks 10 for storage
of the long, thin, loads.  The racks 10 run on a
first set of rails 12 extending parallel to and
adjacent the two longer walls 8 of the warehouse
structure.

Each rack 10 has a framework 14 mounted on a
pair of trolleys 16 having wheels 18 running on the
respective rails 12.  The framework 14 is formed by
short upright posts 20 extending from the trolleys
16, a base cross-brace 22 extending horizontally
between the trolleys and an intermediate
cross-brace 24 extending horizontally between the
upper ends of the short upright posts 20.  Three
longer upright posts 26 mounted on the intermediate cross-brace 24 extend upwardly to a top cross-brace 28 extending horizontally therebetween. A series of shelves or bays 30 are positioned to extend horizontally to one side on the longer upright posts 26 between the intermediate cross-brace 24 and the top cross-brace 28 and further serve to strengthen the structure. In an alternative arrangement, not shown, the shelves may be positioned to both sides of the upright posts 26. Inclined braces 32 extend from the upper ends of the short upright posts 20 to intermediate portions of the outer longer upright posts 26.

A travelling gantry crane 34 includes a pair of trolley sets 36 each having wheels 38 running on a second set of rails 40 positioned intermediate the first set of rails 12 and the longer walls 8 of the warehouse. "A" frame legs 42 extend upwardly from the trolley sets 36 to a cross-beam 44 at a level above the uppermost portions of the racks 10. A carriage 46 slung from the cross beam 44 and steadied on guide rails 48 on the "A" frames carries extendable and retractable transfer arms 50. A raising and lowering mechanism 52 includes an electric motor 54 driving shafts 56 connected to cable drums 58 which carry cables 60 to effect movement of the carriage 46 between a position adjacent the level of the base cross-braces 22 on

0139058

the racks 10 and an uppermost position adjacent the
upper cross beam 44 of the crane above the level of
the uppermost portions of the racks.

An endless conveyor 62 extends the length of
the warehouse, passing over, and, if necessary,
freely supported on, the base cross-braces 22 of
the racks 10.

Drive means (not shown) are provided for the
racks 10 and for the travelling gantry crane 34 on
the respective first and second sets of rails 12,
40.

In operation, the racks 10 are positioned
contiguously on the first set of rails 12 and the
travelling gantry crane 34 is positioned on the
second set of rails 40. To insert a long, thin,
load 6 into the warehouse 2, the load 6 is first
deposited at an infeed station 64 of the
conveyor 62 extending over the base cross-braces 22
of the racks 10 with the longitudinal axis thereof
perpendicular to the direction of movement of the
conveyor. A receiving shelf 30 on one of the
racks 10 is then selected and the rack drive means
energised to move the racks along the first set of
rails 12 to space the selected shelf and rack from the facing adjacent rack. The drive means for the crane 34 is then energised to cause the crane to travel into register with the spacing formed adjacent the selected shelf and drive means (not shown) for the conveyor 62 energised to transport the load to a pick and deposit station at a position subjacent the selected shelf. The lowering mechanism 52 of the carriage 46 is then actuated to lower the carriage to the level of the conveyor and the extendable and retractable transfer arms 50 are moved to the extended position to engage the load. The arms 50 are then retracted to position the load on the carriage 46, the carriage raised to a level corresponding to the selected shelf 30 and the arms extended to deposit the load on the shelf. Finally, the arms 50 are retracted and the carriage 46 either moved to commence another sequence in the same spacing or raised to its uppermost position pending the next sequence.

To remove a selected load 6, a similar procedure is followed. The respective racks 10 are moved apart on the first set of rails 12 to produce a spacing between the racks adjacent the shelf with the selected load, the travelling gantry crane 34 is moved on the second set of rails 40 into register with the spacing formed between the racks and the carriage 46 lowered to the level of the selected load. The arms 50 are then extended to engage the load and retracted to place the load on the carriage 46, which is then lowered to the level of the conveyor 62, and the arms extended to transfer the load from the carriage to the conveyor at the pick and deposit station at a position subjacent the shelf on which the selected load was stored. The conveyor 62 is then energised to transport the load to an outfeed station 66 thereof and the carriage either moved to commence another sequence in the same spacing or raised to the uppermost position to await the next sequence, the arms 50 first having been retracted.

Whilst the drives to the conveyor 62, the racks 10, the crane 34, the carriage 46 and the arms 50 may be individually manually controlled, a sequential control system linked to a computerised memory may, with advantage, be utilised. Such a system would activate the various load transfer steps in sequence and would provide a record of the occupancy of the shelves 30. With a suitable program the system can be utilised, say overnight, to re-arrange loads 6 on the racks 10 to group together loads required to fulfil specific orders, thereby facilitating transfer of the loads from the warehouse.

0139058

The length of the first set of rails 12 is sufficient just to accommodate the racks 10 and a gap to permit operation of the carriage 46 of the crane 34. The conveyor 62 may be arranged with the infeed station 64 at one end and the outfeed station 66 at the other, or the two stations may be combined at one end.

In the arrangement in which shelves 30 are positioned at both sides of the upright posts 26 of the racks 10 the carriage 46 of the crane 34 is provided with transfer arms 50 extendable and retractable to both sides of the carriage.

It will be appreciated that the arrangements described show an economy in requirements for availability of clear space to permit stacking and retrieval of long, thin, loads compared with previous arrangements.

– 9 –

CLAIMS

1.   A warehouse arranged for the mechanised stacking of long, thin, loads (6) thereinto and the mechanised retrieval of such long, thin, loads therefrom including a multiplicity of racks (10), each rack including an array of vertically spaced, horizontally extending, bays (30) and running on a first set of spaced rails (12) extending below base portions of the racks and each rack being formed at the base portion thereof with a spaced framework providing a free space sufficient to permit the passage of the loads, a gantry crane (34) running on a second set of rails (40) disposed parallel to, but outwardly of, the first set of rails (12) and carrying a carriage (46) movable vertically between a position in register with the spaced framework (22) of each rack and a position clear above upper extremities (44) of the racks with intermediate positions in register with the individual bays(30), extendable and retractable transfer arms (50) arranged to transfer loads from and to the carriage (46), conveyor means (62) extending through the spaced framework (22) of the racks to transfer loads (6) through the respective free spaces of the racks, the racks (10) being positionable in contiguous relationship on the first set of rails (12) and movable to space apart, and form a gap between, adjacent racks to permit movement of the carriage (46) of the gantry crane (34) therebetween.

- 10 -

2. A warehouse as claimed in Claim 1, characterised in that the length of the first set of rails (12) is sufficient only to permit formation of a single gap between any adjacent racks (10) with the remaining racks being in contiguous relationship.

3. A warehouse as claimed in Claim 1 or Claim 2, characterised in that the racks (10) are formed with bays (30) opening to opposed sides of the rack, the carriage (46) being provided with first and second sets of extendable and retractable transfer arms (50) respectively arranged to transfer loads from and to the carriage in opposed directions.

4. A warehouse as claimed in any preceding claim, characterised in that a computer control system is provided to select a location to which a load (6) is to be inserted or from which a load is to be withdrawn, to activate movement of the racks (10) to form a gap adjacent the selected location to activate the gantry crane (34), the carriage (46) and the transfer arms (50) to transfer the load between a picking and deposit station at the free space at the base of the rack (10) and the selected location bay (30) and to activate the conveyor means (62) to transport the load from or to the picking and deposit station.

FIG.1

1/3

FIG.2

FIG.3

0139058

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A-2 238 650 (STOPA KESSELBAU GmbH & CO. KG.) * Figures 1,2; page 4, line 32 - page 5, line 16 * | 1 | B 65 G 1/04 |
| Y | * Page 7, lines 2-12 * | 2 | |
| Y | FR-A-2 393 743 (THEOBALD) * Figures 1-4; page 5, line 36 - page 6, line 9 * | 1,2 | |
| A | FR-A-2 326 355 (UNELEC) * Figure 1; page 1, lines 37-40 * | 3 | |
| A | GB-A-2 053 167 (STOLZER LAGERTECHNIK) * Page 1, lines 6-25 * | 4 | TECHNICAL FIELDS SEARCHED (Int. Cl. ³) |
| | ----- | | B 65 G 1/00<br>A 47 B 53/00 |

The present search report has been drawn up for all claims

| Place of search | Date of completion of the search | Examiner |
|---|---|---|
| THE HAGUE | 14-06-1984 | MORRIS A.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82